# FASCICULE DE BREVET EUROPEEN

(11) **EP 1 003 102 B1**
(45) Date de publication et mention de la délivrance du brevet: **30.05.2001**
(21) Numéro de dépôt: 99460063.3
(22) Date de dépôt: 12.11.1999
(51) Int. Cl.: G06F 11/00

(54) **Dispositif d'analyse statistique d'un microcontrôleur**
Vorrichtung zur statistischen Analyse eines Mikrokontrollers
Device for statistical analysis of a microcontrolller

(30) Priorité: 20.11.1998 FR 9814810
(43) Date de publication de la demande: 24.05.2000
(73) Titulaire: STMicroelectronics SA, 94250 Gentilly Cedex (FR)
(72) Inventeur: Wong, Eric, 56100 Lorient (FR)
(74) Mandataire: Ballot, Paul

(56) Documents cités:
- US-A- 5 113 501

## Description

La présente invention concerne un dispositif d'analyse statistique d'un microcontrôleur, lequel dispositif est destiné à comptabiliser les accès aux adresses dudit microcontrôleur pendant le déroulement d'une séquence d'instructions donnée. Le terme microcontrôleur englobe ici les microprocesseurs et les circuits programmés comportant un microprocesseur.

Chaque code programme nouvellement conçu et inséré dans une mémoire ROM d'un microcontrôleur fait généralement l'objet d'une étape de validation en fin de conception. Cette étape de validation est effectuée au moyen d'un émulateur ayant le même comportement électrique que le microcontrôleur. Cet émulateur est muni de moyens supplémentaires pour effectuer la mise au point du microcontrôleur.

Cette mise au point nécessite généralement d'effectuer une analyse statistique sur les adresses issues du compteur ordinal (également désigné par le terme compteur PC) du microprocesseur. Cette analyse statistique consiste à comptabiliser les accès aux différentes adresses du microcontrôleur pendant le déroulement d'une séquence d'instructions donnée. Pour cette analyse, le programme du microcontrôleur voit toutes ses fonctions testées de manière exhaustive, ainsi la séquence d'instructions peut durer plusieurs jours, voire plusieurs semaines.

Actuellement, cette analyse statistique est effectuée. de manière logicielle par des analyseurs logiques. Les signaux présents sur le bus interne du microcontrôleur sont captés au moyen de sondes et sont ensuite analysés dans l'analyseur logique. Tous les accès aux adresses du microcontrôleur sont consignés dans un fichier informatique. Pour chaque accès, on rajoute une ligne correspondante dans le fichier. Au terme de la séquence d'instructions, le fichier comporte autant de lignes que d'accès effectués par le microcontrôleur et est traité par un logiciel de manière à comptabiliser individuellement le nombre d'accès pour chaque adresse du microcontrôleur.

Cette technique présente un inconvénient majeur: la comptabilisation n'est pas effectuée en temps réel. Des données sur les accès du microcontrôleur sont acquises dans un premier temps (création du fichier informatique); la comptabilisation pour chaque adresse est effectuée dans un second temps par traitement logiciel. Or, ce traitement logiciel peut se révéler très long lorsque la taille du fichier généré est importante, par exemple lorsque la séquence d'instructions est prévue pour tester le microcontrôleur pendant plusieurs semaines. La durée d'analyse est alors égale à la durée de la séquence d'instructions majorée de la durée du traitement logiciel.

Le brevet US 5 133 501 décrit un dispositif de comptabilisation d'accès mémoire en temps réel pour un microprogramme. Son désavantage est qu'il nécessite un type de mémoire disposant d'une entrée de données séparée de la sortie de données.

L'invention a pour but de diminuer la durée de cette analyse statistique en proposant un dispositif d'analyse statistique comptabilisant en temps réel les accès pour chaque adresse du microcontrôleur.

Dans ce but, l'invention a pour objet un dispositif d'analyse statistique d'un microcontrôleur visant à comptabiliser le nombre d'accès à chaque adresse dudit microcontrôleur pendant le déroulement d'une séquence d'instructions donnée, caractérisé en ce qu'il comporte une mémoire statique pour mémoriser le nombre d'accès de chaque adresse du microcontrôleur pendant ladite séquence d'instructions, laquelle mémoire est accessible en lecture et en écriture par des adresses miroirs associées chacune à une adresse du microcontrôleur, le nombre d'accès à une adresse du microcontrôleur étant mémorisée dans la mémoire statique à l'adresse miroir correspondante, et des moyens de mise à jour en temps réel des valeurs de nombre d'accès mémorisées dans ladite mémoire statique.

Le nombre d'accès à l'adresse X du microcontrôleur est ainsi enregistré dans la mémoire statique à l'adresse miroir correspondante. En pratique, toutes les valeurs stockées dans la mémoire statique sont à 0 en début d'analyse. Puis, à chaque nouvel accès du microcontrôleur, les moyens de mise à jour des valeurs de la mémoire effectuent les étapes suivantes :
a) lire la valeur de la mémoire statique mémorisée à l'adresse miroir associée à l'adresse-présente- sur le bus interne du microcontrôleur;
b) incrémenter d'une unité ladite valeur, et
c) écrire dans la mémoire statique la valeur incrémentée à la même adresse miroir.

Le temps réel nécessite que ces trois étapes soient effectuées pendant un temps correspondant à un cycle d'horloge du microcontrôleur. En effet, il faut que le dispositif de mise à jour soit prêt à effectuer les mêmes opérations pour l'adresse suivante apparaissant au cycle d'horloge suivant. Aussi, le dispositif d'analyse statistique comporte de préférence :
- un premier circuit de verrouillage pour maintenir à l'entrée d'adresses de la mémoire statique l'adresse miroir associée à l'adresse courante du microcontrôleur pendant un cycle d'horloge du microcontrôleur, ledit premier circuit de verrouillage se verrouillant sur les fronts descendants du signal d'horloge du microcontrôleur;
- un deuxième circuit de verrouillage pour se verrouiller sur la valeur lue à l'étape b), l'opération de lecture de l'étape b) s'effectuant pendant le niveau bas du signal d'horloge du microcontrôleur et le deuxième circuit de verrouillage se verrouillant sur les fronts montants du signal d'horloge du microcontrôleur; et
- un circuit d'incrémentation pour incrémenter d'une unité la valeur verrouillée dans le deuxième circuit de verrouillage et la présenter à l'entrée de données de la mémoire statique avant la fin du cycle d'horloge du premier circuit de verrouillage, l'opération d'écriture de l'étape c) étant alors effectuée pendant le niveau haut du signal d'horloge du microcontrôleur.

Dans une forme de réalisation de base, l'adresse miroir est prise égale à l'adresse du microcontrôleur associée.

D'autres caractéristiques et avantages de l'invention apparaîtront à la lecture de la description détaillée qui suit et qui est faite en référence aux figures annexées, parmi lesquelles:
- la figure 1 représente une forme de réalisation préférée du dispositif d'analyse statistique selon l'invention; et
- la figure 2 représente les chronogrammes des signaux présents à l'entrée et à la sortie des différents éléments du dispositif de l'invention.

Dans l'exposé qui suit, l'analyse statistique est effectuée sur un microcontrôleur synchronisé par un signal d'horloge H.

Le dispositif d'analyse statistique de l'invention est connecté au bus interne d'adresses du microcontrôleur à analyser. Il comporte essentiellement une mémoire statique et un dispositif de mise à jour en temps réel des données de cette mémoire. Ces moyens sont disposés à l'intérieur de l'émulateur du microcontrôleur. A chaque adresse du microcontrôleur est associée une adresse miroir de la mémoire statique. Selon l'invention, le nombre d'accès à l'adresse X du microcontrôleur pendant une période de test est enregistrée en temps réel dans la mémoire statique à l'adresse miroir correspondante. En fin d'analyse, le nombre d'accès associé à chaque adresse du microcontrôleur est obtenu par lecture de la mémoire statique.

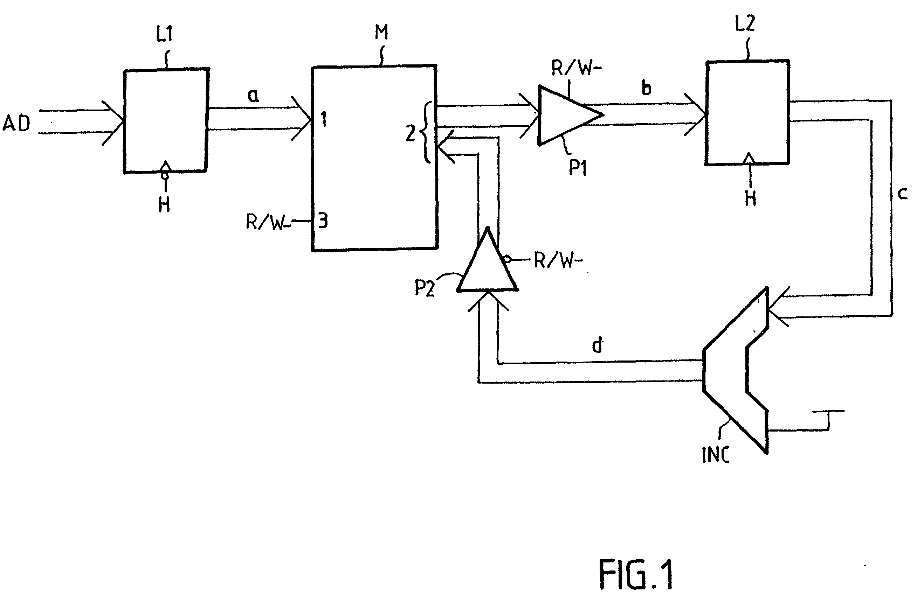

La figure 1 représente une forme de réalisation préférée du dispositif de l'invention. Il comporte une mémoire statique M, de type SRAM, comportant une entrée d'adresses 1, une entrée/sortie de données 2 et une entrée de commande 3 recevant un signal R/W- contrôlant la lecture et l'écriture des cellules de la mémoire statique. Cette mémoire est chargée de stocker le nombre d'accès des adresses du microcontrôleur aux adresses miroirs correspondantes.

La taille de la mémoire statique M est prise égale à celle des mémoires internes du microcontrôleur. Elle est généralement égale à 256 K. Selon une forme de réalisation de base, les adresses miroirs de la mémoire statique sont égales aux adresses du microcontrôleur. Dans l'exemple de la figure 1, AD désigne à la fois les adresses présentes sur le bus interne du microcontrôleur et les adresses miroirs de la mémoire statique.

En début d'analyse, les valeurs sauvegardées dans la mémoire statique M sont nulles. Puis, à chaque accès à une adresse du microcontrôleur, la valeur de nombre d'accès correspondante dans la mémoire statique M est mise à jour en temps réel par un dispositif approprié. Le dispositif de mise à jour est chargé de lire dans la mémoire statique la valeur à l'adresse miroir correspondant à l'adresse présente sur le bus interne du microcontrôleur, de l'incrémenter d'une unité et d'écrire dans la mémoire statique la valeur incrémentée à cette même adresse miroir, ces trois étapes étant à effectuer en un cycle du signal d'horloge H.

Pour ce faire, le dispositif de mise à jour illustré à la figure 1 comporte principalement deux circuits de verrouillage, L1 et L2, et un circuit d'incrémentation INC.

L'entrée du circuit de verrouillage L1 est connectée au bus interne du microcontrôleur et sa sortie est connectée à l'entrée d'adresses 1 de la mémoire statique M. Ce circuit de verrouillage comporte une entrée d'horloge sur laquelle est appliqué le signal d'horloge H inversé. Ce circuit de verrouillage reçoit les adresses AD et se verrouille sur l'adresse miroir (qui est aussi l'adresse courante du microcontrôleur) au moment du front descendant du signal d'horloge H. Ce circuit de verrouillage a pour rôle de maintenir à l'entrée d'adresses de la mémoire M l'adresse miroir pendant un cycle d'horloge à partir des fronts descendants du signal H.

Le circuit de verrouillage L2 est connectée à l'entrée/sortie de données 2 de la mémoire statique M. Il est destiné à sauvegarder les valeurs lues dans la mémoire statique M pendant un cycle d'horloge à partir des fronts montants du signal d'horloge H.

Le circuit d'incrémentation INC est connectée à la sortie du circuit de verrouillage L2. Il est chargé d'incrémenter la valeur mémorisée dans le circuit de verrouillage L2 et de la transmettre à la mémoire statique M pour qu'elle y soit écrite avant la fin du cycle d'horloge du premier circuit de verrouillage. La sortie de ce circuit est par conséquent reliée à l'entrée/sortie de données 2 de la mémoire statique.

Dans la forme de réalisation présentée à la figure 1, deux portes trois états, P1 et P2, ont été rajoutées pour éviter tout conflit au niveau de l'entrée/sortie de données 2 de la mémoire statique M. La porte P1 est intercalée entre l'entrée/sortie 2 de la mémoire et l'entrée du circuit de verrouillage L2. Cette porte est passante pendant les opérations de lecture dans la mémoire M. La porte P2 est insérée entre la sortie du circuit d'incrémentation INC et l'entrée/sortie 2 de la mémoire M. Cette porte est passante pendant les opérations d'écriture dans la mémoire M.

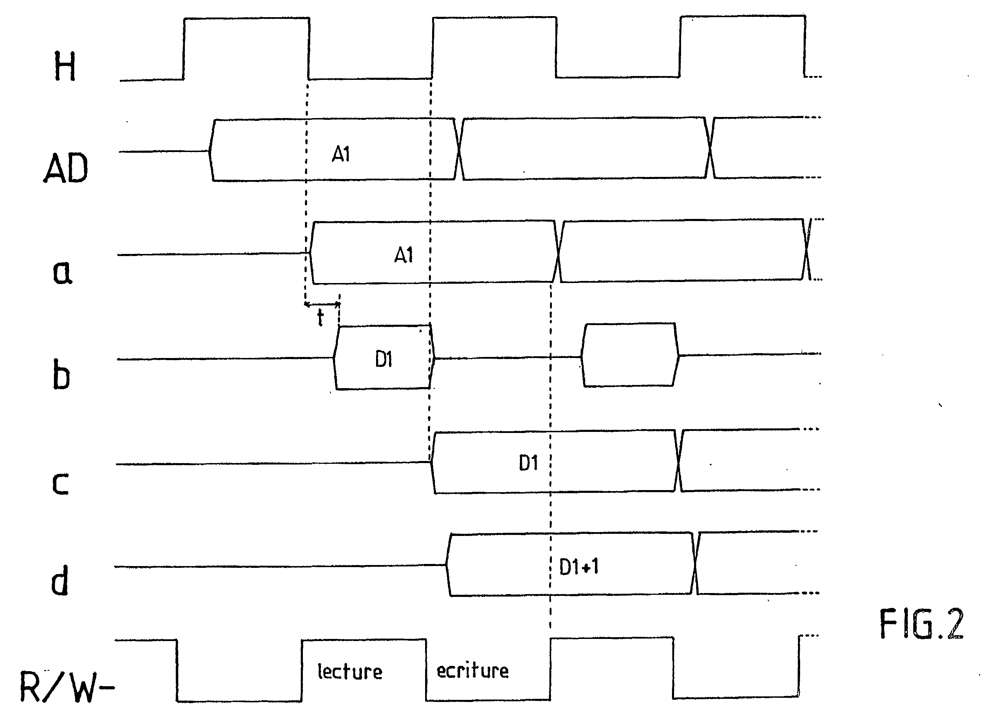

Le fonctionnement de ce dispositif d'analyse est illustré par les chronogrammes des signaux H, AD, a, b, c, d et R/W- de la figure 2. Les signaux a, b, c et d désignent respectivement le signal d'adresse à la sortie du circuit de verrouillage L1, le signal de donnée à l'entrée du circuit de verrouillage L2, le signal de donnée à la sortie du circuit de verrouillage L2 et le signal de donnée à la sortie du circuit d'incrémentation INC. Le signal R/W- est équivalent au signal d'horloge H inversé.

Le dispositif de l'invention fonctionne de la manière suivante : une adresse A1 apparaît sur le bus interne du microcontrôleur. Cette adresse est verrouillée dans le circuit de verrouillage L1 sur un front descendant du signal d'horloge H et elle y est sauvegardée pendant un cycle d'horloge. Une donnée D1 est alors lue dans la mémoire M à l'adresse A1. La donnée D1 correspond au nombre d'accès associé à l'adresse A1 du microcontrôleur avant comptage de l'accès en cours. Cette donnée apparaît à la sortie 2 de la mémoire après un temps t correspondant au temps d'accès de la mémoire M. La donnée D1 est ensuite sauvegardée dans le circuit de verrouillage L2 au front montant suivant du signal H. Ladite donnée D1 apparaît alors à la sortie du circuit L2 et est incrémentée par le circuit d'incrémentation INC. La valeur incrémentée D1+1 est ensuite écrite dans la mémoire M à l'adresse A1 avant la fin du cycle d'horloge du circuit de verrouillage L1.

Ce dispositif est particulièrement avantageux en terme de rapidité puisque la comptabilisation des accès aux adresses du microcontrôleur se fait automatiquement et en temps réel, cycle d'horloge par cycle d'horloge. A la fin de l'exécution de la séquence d'instructions du microcontrôleur, la mémoire statique contient à chacune de ses adresses le nombre des accès correspondant à la même adresse dans le microprocesseur, et cela sans traitement logiciel. Il suffit de lire la mémoire à la fin de l'exécution de la séquence d'instructions.

Par ailleurs, le dispositif de mise à jour de la mémoire peut être réalisé de manière très simple sur un réseau de logique programmable de type FPGA.

Enfin, la valeur mémorisée dans la mémoire statique M peut être très elevée sans préjudice sur la durée d'analyse puisque celle-ci est enregistrée en temps réel dans la mémoire. Il suffit seulement de prévoir une mémoire SRAM pouvant contenir des nombres élevés ou plus simplement de prévoir plusieurs mémoires SRAM montées en parallèle, par exemple 3 mémoires de 256 K par 16 bits, et de leur associer un circuit d'incrémentation approprié, dans l'exemple précédent un incrémenteur sur 48 bits. Le nombre d'accès pouvant être enregistré pour chaque adresse du microcontrôleur est alors 2⁴⁸, ce qui est énorme.

## Revendications

1. Dispositif d'analyse statistique d'un microcontrôleur visant à comptabiliser le nombre d'accès à chaque adresse dudit microcontrôleur pendant le déroulement d'une séquence d'instructions donnée, ledit microcontrôleur étant synchronisé par un signal d'horloge (H), lequel dispositif comporte :
- une mémoire statique (M) pour mémoriser le nombre d'accès de chaque adresse du microcontrôleur pendant ladite séquence d'instructions, laquelle mémoire est accessible en lecture et en écriture par des adresses miroirs associées chacune à une adresse du microcontrôleur, le nombre d'accès à une adresse du microcontrôleur étant mémorisée dans la mémoire statique à l'adresse miroir correspondante, et
- des moyens de mise à jour en temps réel (L1,L2,INC) des valeurs de nombre d'accès mémorisées dans ladite mémoire statique, lesdits moyens de mise à jour effectuant, en un cycle d'horloge, une opération de lecture de la valeur (D1) de la mémoire statique mémorisée à l'adresse miroir (A1) associée à l'adresse présente sur le bus interne du microcontrôleur, une opération d'incrémentation de ladite valeur (Dl), et une opération d'écriture de la valeur incrémentée (D1+1) dans la mémoire statique à la même adresse miroir (A1),
et est caractérisé en ce que lesdits moyens de mise à jour des valeurs de la mémoire statique comportent:
- un premier circuit de verrouillage (L1) pour maintenir à l'entrée d'adresses de la mémoire statique l'adresse miroir (A1) associée à l'adresse courante du microcontrôleur pendant un cycle d'horloge du microcontrôleur, ledit premier circuit de verrouillage se verrouillant sur les fronts descendants du signal d'horloge (H) du microcontrôleur;
- un deuxième circuit de verrouillage (L2) pour se verrouiller sur la valeur (D1) lue pendant l'opération de lecture de la mémoire statique, ladite opération de lecture s'effectuant pendant le niveau bas du signal d'horloge (H) du microcontrôleur et le deuxième circuit de verrouillage se verrouillant sur les fronts montants du signal d'horloge (H) du microcontrôleur; et
- un circuit d'incrémentation (INC) pour incrémenter d'une unité la valeur verrouillée (D1) dans le deuxième circuit de verrouillage (L2) et la présenter à l'entrée de données (2) de la mémoire statique avant la fin du cycle d'horloge du premier circuit de verrouillage (L1), l'opération d'écriture de la valeur incrémentée (D+1) étant alors effectuée pendant le niveau haut du signal d'horloge (H) du microcontrôleur.

2. Dispositif d'analyse statistique selon la revendication 1, caractérisé en ce que la taille de la mémoire statique est égale à celle de l'ensemble des mémoires internes dudit microcontrôleur.

3. Dispositif d'analyse statistique selon la revendication 1 ou 2, caractérisé en ce que les moyens de mise à jour des valeurs de la mémoire statique se présentent sous la forme d'un réseau logique programmable.

4. Dispositif d'analyse statistique selon l'une des revendications 1 à 3, caractérisé en ce qu'il comporte au moins une mémoire statique supplémentaire munie d'un second circuit de verrouillage supplémentaire de données, disposée en parallèle avec ladite mémoire statique (M) et ledit second circuit de verrouillage (L2), pour permettre la mémorisation d'un plus grand nombre d'accès pour chaque adresse du microcontrôleur.

## Patentansprüche

1. Vorrichtung zur statistischen Analyse eines Mikrocontrollers, die zum Erfassen der Anzahl der Zugriffe des Mikrocontrollers auf jede Adresse während des Ablaufs einer gegebenen Befehlssequenz dient, wobei der Mikrocontroller durch ein Taktsignal (H) synchronisiert wird und wobei die Vorrichtung Folgendes aufweist:
- einen statischen Speicher (M) zum Speichern der Anzahl der Zugriffe des Mikrocontrollers auf jede Adresse während der Befehlssequenz, der über Spiegeladressen, die jeweils einer Adresse des Mikrocontrollers zugeordnet sind, ausgelesen und beschrieben werden kann, wobei die Anzahl der Zugriffe des Mikrocontrollers auf eine Adresse im statischen Speicher in der entsprechenden Spiegeladresse gespeichert wird, und
- Mittel zur Aktualisierung in Echtzeit (L1, L2, INC) der im statischen Speicher gespeicherten Werte für die Anzahl der Zugriffe, wobei die Mittel zur Aktualisierung in einem Taktzyklus einen Vorgang des Auslesens des Wertes (D1) des statischen Speichers, der in der Spiegeladresse (A1) gespeichert ist, die der am internen Bus des Mikrocontrollers anliegenden Adresse zugeordnet ist, einen Vorgang des Inkrementierens dieses Wertes (D1) und einen Vorgang des Schreibens des inkrementierten Wertes (D1 + 1) in den statischen Speicher in dieselbe Spiegeladresse (A1) durchführen,
und dadurch gekennzeichnet ist, dass die Mittel zur Aktualisierung der Werte des statischen Speichers Folgendes aufweisen:
- eine erste Verriegelungsschaltung (L1), um die der aktuellen Adresse des Mikrocontrollers zugeordnete Spiegeladresse (A1) während eines Taktzyklus' des Mikrocontrollers am Adresseingang des statischen Speichers zu halten, wobei die erste Verriegelungsschaltung an den absteigenden Flanken des Taktsignals (H) des Mikrocontrollers verriegelt wird;
- eine zweite Verriegelungsschaltung (L2), die am während des Vorgangs des Auslesens des statischen Speichers gelesenen Wert (D1) verriegelt wird, wobei der Lesevorgang beim niedrigen Pegel des Taktsignals (H) des Mikrocontrollers erfolgt und die zweite Verriegelungsschaltung an den aufsteigenden Flanken des Taktsignals (H) des Mikrocontrollers verriegelt wird; und
- eine Inkrementierungsschaltung (INC) um den in der zweiten Verriegelungsschaltung (L2) verriegelten Wert (D1) um eine Einheit zu inkrementieren und ihn vor Ende des Taktzyklus' der ersten Verriegelungsschaltung (L1) an den Dateneingang (2) des statischen Speichers zu legen, wobei der Vorgang des Schreibens des inkrementierten Wertes (D + 1) dann beim hohen Pegel des Taktsignals (H) des Mikrocontrollers ausgeführt wird.

2. Vorrichtung zur statistischen Analyse nach Anspruch 1, dadurch gekennzeichnet, dass die Größe des statischen Speichers gleich der Größe der Gesamtheit der internen Speicher des Mikrocontrollers ist.

3. Vorrichtung zur statistischen Analyse nach Anspruch 1 oder 2, dadurch gekennzeichnet, dass die Mittel zur Aktualisierung der Werte des statischen Speichers als programmierbares Gate-Array vorliegen.

4. Vorrichtung zur statistischen Analyse nach einem der Ansprüche 1 bis 3, dadurch gekennzeichnet, dass sie mindestens einen zusätzlichen statischen Speicher aufweist, der mit einer zusätzlichen zweiten Schaltung zur Verriegelung von Daten versehen ist und parallel zum statischen Speicher (M) und zur zweiten Verriegelungsschaltung (L2) geschaltet ist, um das Speichern einer größeren Anzahl an Zugriffen des Mikrocontrollers auf jede Adresse zu ermöglichen.

## Claims

1. A device for the statistical analysis of a microcontroller, for counting the number of times each address in the said microcontroller is accessed during the course of a given sequence of instructions, the said microcontroller being synchronised by a clock signal (H), wherein the said device comprises:
- a static memory (M) for memorising the number of accessions made to each address in the microcontroller during the said sequence of instructions, which memory is accessible for reading and writing through mirror addresses, each of which is associated with one address in the microcontroller, the number of accessions to an address in the microcontroller being memorised in the static memory at the corresponding mirror address, and
- means (L1, L2, INC) for displaying in real time values of the number of accessions memorised in the said static memory, the said display means performing, in one clock cycle, an operation of reading the value (D1) of the static memory memorised in the mirror address (A1) associated with the address present on the internal bus of the microcontroller, an operation of increasing the said value (D1), and an operation of writing the increased value (D1 + 1) in the static memory at the same mirror address (A1),
and is characterised in that the said means for displaying the values in the static memory comprise:
- a first locking circuit (L1) for maintaining at the address input of the static memory the mirror address (A1) associated with the current address of the microcontroller during one clock cycle of the microcontroller, the said first locking circuit locking itself on descending fronts of the clock signal (H) of the microcontroller;
- a second locking circuit (L2) for locking itself on the value (D1) which is read during the operation of reading the static memory, the said reading operation being carried out during the low level phase of the clock signal (H) of the microcontroller, and the second locking circuit locking itself on the ascending fronts of the clock signal (H) of the microcontroller; and
- an incrementation circuit (INC) for increasing by unity the locked value (D1) in the second locking circuit (L2) and for presenting it at the data input (2) of the static memory before the end of the clock cycle of the first locking circuit (L1), the operation of writing the increased value (D + 1) being then performed during the high level phase of the clock signal (H) of the microcontroller.

2. A statistical analysis device according to Claim 1, characterised in that the size of the static memory is equal to that of the totality of the internal memories of the said microcontroller.

3. A statistical analysis device according to Claim 1 or Claim 2, characterised in that the means for displaying values in the static memory are in the form of a programmable logic network.

4. A statistical analysis device according to one of Claims 1 to 3, characterised in that it includes at least one additional static memory including a supplementary second data locking circuit, disposed in parallel with the said static memory (M) and the said second locking circuit (L2), to enable an increased number of accessions to be memorised for each address of the microcontroller.
